# EUROPÄISCHE PATENTSCHRIFT

(11) **EP 4 484 221 B1**
(45) Veröffentlichungstag und Bekanntmachung des Hinweises auf die Patenterteilung: **22.04.2026**
(21) Anmeldenummer: 24020212.7
(22) Anmeldetag: 20.06.2024
(51) Int. Cl.: B60Q 3/14, B60Q 3/217, B60Q 3/64, B60Q 3/74, B60Q 3/78, B60R 13/02

(54) **BELEUCHTUNGSEINRICHTUNG FÜR DIE BELEUCHTUNG DES FAHRZEUGINNENRAUMS**
LIGHTING DEVICE FOR ILLUMINATING THE INTERIOR OF A VEHICLE
DISPOSITIF D'ÉCLAIRAGE POUR L'ÉCLAIRAGE DE L'HABITACLE D'UN VÉHICULE

(30) Priorität: 28.06.2023 CZ 20230252
(43) Veröffentlichungstag der Anmeldung: 01.01.2025
(73) Patentinhaber: Skoda Auto a.s., 29301 Mladá Boleslav (CZ)
(72) Erfinder: Brojírová, Katerina, 29306 Kosmonosy (CZ); Hájek, Stepán, 29301 Mladá Boleslav (CZ); Kristl, Petr, 29301 Mladá Boleslav (CZ)

(56) Entgegenhaltungen:
- EP-A1- 2 676 841
- WO-A1-2017/220181
- CN-A- 115 092 044
- DE-A1- 102005 047 793
- DE-A1- 102011 119 534
- JP-A- 2011 251 580
- US-A1- 2016 080 847

## Beschreibung

### Technisches Sachgebiet

Die vorliegende Erfindung betrifft eine Beleuchtungseinrichtung für die Beleuchtung des Fahrzeuginnenraums, wobei sie insbesondere eine durchleuchtete Zierblende, die beispielsweise im Armaturenbrett eines Fahrzeugs angeordnet ist, betrifft.

### Stand der Technik

Heutzutage wird der Wert darauf gelegt, dass die Beleuchtung des Fahrzeuginnenraums nicht nur eine praktische Funktion erfüllt, d. h. die Beleuchtungsfunktion von z. B. verschiedenen Bedienkomponenten des Fahrzeugs bei Abend- oder Nachtfahrten, sondern auch eine ästhetische Funktion. Die Ambientebeleuchtung sorgt für ein ansprechendes Erscheinungsbild des Innenraums, macht die Fahrt angenehmer und ermöglicht es bei Bedarf auch, die Lichtfarbe je nach den aktuellen Bedürfnissen oder der Stimmung der Fahrgäste zu ändern. Nach heutigem Stand der Technik gibt es z.B. durchleuchtete Zierblenden, die auf dem Armaturenbrett des Fahrzeugs angebracht sind.

Die bekannten Lösungen für durchleuchtete Zierblenden verwenden meist eine Vielzahl von LEDs, die von der Seite in einen flachen Lichtleiter strahlen, über dem sich eine Leiste mit einer IMD-Folie mit dem entsprechenden Dekor befindet. Allerdings beträgt die Lichtdurchlässigkeit dieser Folie in der Regel nur etwa 10 %, so dass mehrere LEDs zur Durchleuchtung verwendet werden müssen und eine spezielle Leiterplatte (PCB) sowie eine Software zur Steuerung von LED entwickelt werden müssen. Dies erhöht die Produktionskosten erheblich. Darüber hinaus bieten diese bestehenden durchleuchteten Zierblenden keine andere Beleuchtungsart, z.B. eine Lichtlinie oder indirekte Beleuchtung, ebenso wie die Zierblenden, die z.B. in den Patentschriften CN110667471 A oder EP3819535 A1 dokumentiert sind. Sollte eine solche zusätzliche Beleuchtung erforderlich sein, müsste die Zierblende mit zusätzlichen Lichtleitern und vor allem mit zusätzlichen Lichtquellen versehen werden.

Die Patentschrift EP4061672 A1 offenbart eine Lösung eines Beleuchtungsmoduls zur Beleuchtung des Fahrzeuginnenraums, das eine Kombination aus einer beleuchteten Zierblende und indirekter Beleuchtung bietet. Jede dieser Beleuchtungsarten wird jedoch mit einer eigenen Lichtquelle realisiert, was wiederum die Produktionskosten erhöht und insgesamt das Design der Lösung erschwert.

Weitere Lösungen der Beleuchtungsmodule zur Beleuchtung des Fahrzeuginnenraums sind aus WO 2017/220181 A1 und EP 2 676 841 A1 bekannt.

Es wäre daher wünschenswert, eine Beleuchtungslösung zu finden, die sich durch ein einfaches Design auszeichnet, das die Kombination mehrerer Beleuchtungsarten unter Verwendung einer einzigen Lichtquelle ermöglicht. Die neue Lösung sollte daher erschwinglich sein und gleichzeitig eine optisch ansprechende Beleuchtung für den Fahrzeuginnenraum bieten.

### Zusammenfassung der Erfindung

Die vorgenannten Mängel werden bis zu einem gewissen Grad durch eine Beleuchtungseinrichtung für die Beleuchtung des Fahrzeuginnenraums beseitigt, die ein Trägerteil zur Befestigung im Fahrzeuginnenraum, einen ersten Lichtleiter, einen zweiten Lichtleiter, einen Diffusor, ein Abdeckteil und mindestens eine Lichtquelle umfasst, wobei der erste Lichtleiter eine längliche Form hat und mindestens eine Eintrittsfläche für den Lichteintritt aufweist, wobei die Lichtquelle auf die mindestens eine Eintrittsfläche des ersten Lichtleiters gerichtet ist. Das Wesen der vorliegenden Erfindung besteht darin, dass das Licht der mindestens einen Lichtquelle vom ersten Lichtleiter weiter zum Diffusor und zum zweiten Lichtleiter verteilt wird, und dass zwischen dem Abdeckteil und dem Trägerteil ein Hohlraum definiert ist, in dem der erste Lichtleiter, der zweite Lichtleiter und der Diffusor angeordnet sind, wobei der zweite Lichtleiter entlang des ersten Lichtleiters angeordnet ist, so dass sich das Licht der mindestens einen Lichtquelle vom ersten Lichtleiter zum zweiten Lichtleiter ausbreiten kann, wobei der zweite Lichtleiter eine flache Form aufweist, die eine dem Trägerteil zugewandte Rückseite und eine dem Abdeckteil zugewandte Vorderseite umfasst. Mindestens ein Teil des Abdeckteils ist lichtdurchlässig, und auf der Rückseite des zweiten Lichtleiters ist eine Auskopplungsstruktur angeordnet, um das Licht aus dem zweiten Lichtleiter in Richtung des Abdeckteils auszukoppeln. Der Hohlraum zwischen dem Abdeckteil und dem Trägerteil umfasst eine erste Lücke, die sich entlang des Abdeckteils in den Fahrzeuginnenraum erstreckt, und wobei mindestens ein Teil des Diffusors in dieser ersten Lücke angeordnet ist und dazu dient, eine Lichtlinie in dieser ersten Lücke zu erzeugen.

Der Vorteil der vorliegenden Lösung liegt vor allem darin, dass sie die Kombination mehrerer Beleuchtungsarten auch bei Verwendung einer einzigen Lichtquelle ermöglicht. Daher ist es nicht erforderlich, eine spezielle Leiterplatte oder Steuerungssoftware zu entwickeln, wie bei den bisher verwendeten Lösungen, bei denen mehrere Lichtquellen zur Beleuchtung der IMD-Folie eingesetzt werden. Eine optisch ansprechende resultierende Beleuchtung des Fahrzeuginnenraums wird auf kostengünstige Weise erreicht. Konkret werden mindestens zwei Beleuchtungsarten erreicht. Der lichtdurchlässige Teil des Abdeckteils bildet die durchleuchtete Zierblende und der in der ersten Lücke angeordnete Teil des Diffusors bildet die Lichtlinie. Die Beleuchtungseinrichtung kann am Armaturenbrett, an der Türverkleidung oder an anderen Teilen des Innenraums angebracht werden.

Zumindest ein Teil des Diffusors ist vorzugsweise zwischen dem ersten Lichtleiter und dem zweiten Lichtleiter angeordnet, wobei der Diffusor eine erste, dem ersten Lichtleiter zugewandte Seite und eine gegenüberliegende zweite, dem zweiten Lichtleiter zugewandte Seite aufweist. Diese Anordnung des Diffusors sorgt dafür, dass das Licht aus dem ersten Lichtleiter homogener in den zweiten Lichtleiter durchgeht. Auch die resultierende Beleuchtung, die durch den lichtdurchlässigen Teil des Abdeckteils hindurchgeht, weist somit eine höhere Homogenität auf.

Vorteilhafterweise umfasst das Abdeckteil oder der zweite Lichtleiter eine zweite dekorative Struktur. Die zweite dekorative Struktur ermöglicht es, den visuellen Reiz der Beleuchtung zu erhöhen, da sie in Kombination mit der Auskopplungsstruktur, die als erste dekorative Struktur betrachtet werden kann, einen gewissen Tiefeneffekt (3D) erzeugt.

Das Abdeckteil umfasst vorzugsweise eine lichtdurchlässige Blende und einen Rahmen, der um den Umfang der lichtdurchlässigen Blende herum angeordnet ist. Die lichtdurchlässige Blende des Abdeckteils erfüllt einerseits die Schutzfunktion des zweiten Lichtleiters und weiterer Komponenten vor Schmutzablagerungen, verbessert aber gleichzeitig das resultierende optische Erscheinungsbild. So kann beispielsweise die lichtdurchlässige Blende abgedunkelt werden (Rauchfarbe) und eine zweite dekorative Struktur kann darauf gebildet werden.

Die zweite dekorative Struktur ist vorzugsweise auf der dem zweiten Lichtleiter zugewandten Rückseite der lichtdurchlässigen Blende angeordnet. Dank dieser Anordnung entsteht ein Tiefeneffekt, und die mögliche Schmutzablagerung auf der zweiten dekorativen Struktur wird ebenfalls verhindert. Alternativ kann eine zweite dekorative Struktur auf der Vorderseite der lichtdurchlässigen Blende (obwohl es hier zur Schmutzablagerung kommen kann) oder auf der Vorderseite des zweiten Lichtleiters angebracht werden.

Die auf der Rückseite des zweiten Lichtleiters angebrachte Auskopplungsstruktur bildet vorzugsweise ein dekoratives Muster. Die Auskopplungsstruktur muss vorzugsweise also nicht nur die Funktion der Lichtauskopplung aus dem zweiten Lichtleiter durch den lichtdurchlässigen Teil des Abdeckteils erfüllen, sondern sie kann selbst in einem dekorativen Muster oder einem dekorativen Bild angeordnet sein. Dies kann zu einem noch attraktiveren Gesamteindruck beitragen.

Das Abdeckteil umfasst eine Oberkante und die erste Lücke erstreckt sich vorzugsweise entlang der Oberkante des Abdeckteils in den Innenraum des Fahrzeugs. Die so entstandene Lichtlinie befindet sich oberhalb der beleuchteten Zierblende.

Der Hohlraum zwischen dem Abdeckteil und dem Trägerteil enthält vorzugsweise eine zweite Lücke, die sich in den Innenraum des Fahrzeugs erstreckt. Damit wird sogar eine Kombination von drei verschiedenen Beleuchtungsarten erreicht, dies immer mithilfe von nur einer Lichtquelle. Neben dem durchleuchteten Dekor und der Lichtlinie ist auch eine indirekte Beleuchtung vorgesehen. Indirekte Beleuchtung entsteht, wenn das Licht durch eine zweite Lücke durchgeht und eine Komponente des Fahrzeuginnenraums beleuchtet wird, die sich in der Nähe der Beleuchtungseinrichtung befindet.

Das Abdeckteil umfasst eine Unterkante und die zweite Lücke erstreckt sich vorzugsweise entlang der Unterkante des Abdeckteils in den Innenraum des Fahrzeugs. Die daraus resultierende indirekte Beleuchtung beleuchtet das Armaturenbrett oder einen anderen Teil des Fahrzeuginnenraums unter der durchleuchteten Zierblende.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine Beleuchtungseinrichtung gemäß der vorliegenden Erfindung im Querschnitt A-A,
Fig. 2 eine Beleuchtungseinrichtung gemäß der vorliegenden Erfindung mit einer Lichtquelle in einer Vorderansicht und mit Darstellung von der Schnittebene A-A und
Fig. 3 eine Beleuchtungseinrichtung gemäß der vorliegenden Erfindung mit zwei Lichtquellen in einer Vorderansicht.

### Ausführungsbeispiele der Erfindung

Die Erfindung wird anhand von Ausführungsbeispielen unter Bezugnahme auf die entsprechenden Zeichnungen näher erläutert.

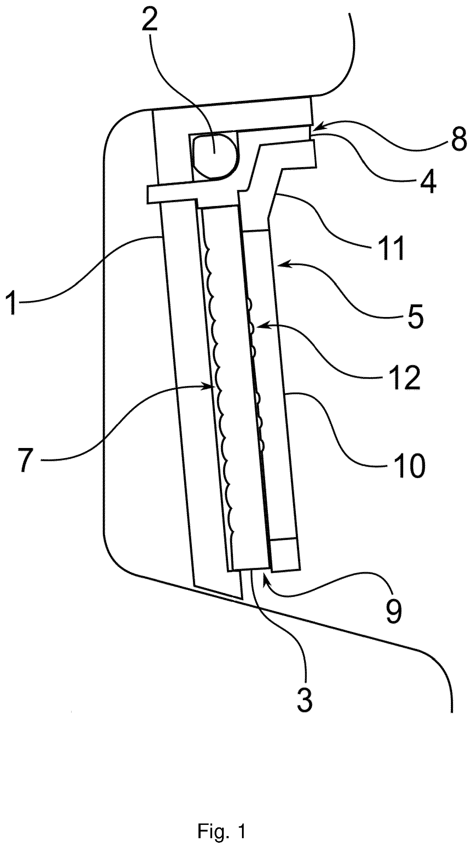

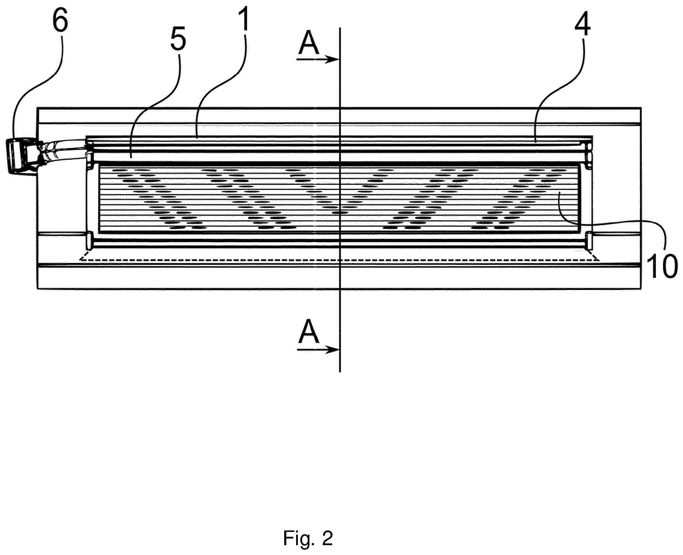

Die Beleuchtungseinrichtung gemäß der vorliegenden Erfindung umfasst ein Trägerteil 1, einen ersten Lichtleiter 2, einen zweiten Lichtleiter 3, einen Diffusor 4, ein Abdeckteil 5 und mindestens eine Lichtquelle 6, wobei in der ersten beispielhaften Ausführungsform gemäß Fig. 1 und Fig. 2 umfasst die Beleuchtungseinrichtung nur eine Lichtquelle 6. Die relative Anordnung der oben genannten einzelnen Komponenten sowie deren spezifische Ausgestaltung wird im Folgenden vor allem anhand der Fig.1 im Querschnitt näher beschrieben, in der die Anordnung der einzelnen Komponenten der Beleuchtungseinrichtung am besten zu erkennen ist.

Das Trägerteil 1 dient zur Befestigung der Beleuchtungseinrichtung im Fahrzeuginnenraum, konkret z. B. am Armaturenbrett, an der Türverkleidung oder an einem anderen Teil des Innenraums. Die Teile des Innenraums, an denen die Beleuchtungseinrichtung befestigt werden kann, sollten idealerweise eine ebene Fläche aufweisen. In der ersten beispielhaften Ausführung, die in der Figur 1 dargestellt ist, ist das Trägerteil 1 als ein Körper ausgeführt, dessen Form im Querschnitt dem Buchstaben L ähnelt. Die Außenseiten dieses Trägerteils 1, insbesondere seine Ober- und Rückseite, sind flach und es wird vorgesehen, dass sie am flachen Teil des Innenraums angebracht werden. Alternativ, wenn die Beleuchtungseinrichtung an einem gekrümmten Teil des Innenraums befestigt werden soll, kann das Trägerteil 1 auch so gekrümmt sein, dass seine Form der Form des betreffenden Teils des Innenraums entspricht, damit die Beleuchtungseinrichtung bequem befestigt werden kann. Die Befestigung selbst kann z. B. durch Verkleben (mit Klebstoff oder Klebeband) oder Verschrauben usw. erfolgen. In der Fig.1 ist zu sehen, dass das Trägerteil 1 an seiner Oberseite am Armaturenbrett befestigt ist, alternativ kann es aber auch an anderen Teilen, z. B. an seiner Rückseite, befestigt werden.

Darüber hinaus werden weitere Komponenten der Beleuchtungseinrichtung am Trägerteil 1 befestigt, zum Beispiel durch Klammern, Verschrauben oder Verkleben. Es ist jedoch wichtig zu beachten, dass der erste Lichtleiter 2, der zweite Lichtleiter 3 und der Diffusor 4 nicht geklebt werden sollten, da das Licht an der Klebestelle ausgekoppelt werden könnte. Dies würde nicht nur zu einer schwächeren Intensität der resultierenden Beleuchtung führen, sondern auch zum Auftreten verschiedener Inhomogenitäten in dieser Beleuchtung. Das Abdeckteil 5 kann mit dem Trägerteil 1 verklebt werden, beispielhaft wird das Abdeckteil 5 jedoch mit Hilfe von Klammern am Trägerteil 1 befestigt. Diese Klammern können sich z. B. an den Lateralseiten des Abdeckteils 5 und des Trägerteils 1 befinden und sind im Schnitt in der Fig. 1 nicht sichtbar. Beispielhaft ist auch der Diffusor 4 mit Klammern am Trägerteil 1 befestigt. Alternativ kann die Befestigung der einzelnen Komponenten auch anders erfolgen, sofern durch diese Ausführung ein kompakter Aufbau der Beleuchtungseinrichtung gewährleistet ist und nicht die Gefahr besteht, dass sich der erste Lichtleiter 2, der zweite Lichtleiter 3 oder der Diffusor 4 lösen, verschieben oder gar aus dem Trägerteil 1 herausfallen.

Wie aus der Figur 1 ersichtlich ist, bilden die einzelnen Komponenten der Beleuchtungseinrichtung im Wesentlichen eine Sandwichstruktur, wobei das Abdeckteil 5 auf der Vorderseite der Beleuchtungseinrichtung und das Trägerteil 1 auf der gegenüberliegenden Rückseite der Beleuchtungseinrichtung angeordnet ist. Der Begriff Vorderseite wird deshalb gewählt, weil dies die Seite ist, von der aus die Beleuchtungseinrichtung von einer Person im Fahrzeuginneren beobachtbar ist. Zwischen dem Abdeckteil 5 und dem Trägerteil 1 entsteht ein Hohlraum, um weitere Komponenten der Beleuchtungseinrichtung, konkret den ersten Lichtleiter 2, den zweiten Lichtleiter 3 und den Diffusor 4, aufzunehmen. In der beispielhaften Ausführung gemäß Fig. 1 hat dieser Hohlraum im Schnitt ein etwa L-förmiges Profil und bildet eine erste Lücke 8 und eine zweite Lücke 9, wobei sich die erste Lücke 8 und die zweite Lücke 9 in den Fahrzeuginnenraum erstrecken.

In der dargestellten ersten beispielhaften Ausführung befinden sich der erste Lichtleiter 2 und die erste Lücke 8 nahe der Oberseite des Trägerteils 1 und umgekehrt die zweite Lücke 9 befindet sich nahe der Unterseite des Trägerteils 1. Der erste Lichtleiter 2 hat eine längliche Form und verläuft in Längsrichtung der Beleuchtungseinrichtung, d. h. in einer Richtung senkrecht zur Ebene des Querschnitts A-A gemäß Fig. 2. Um Licht von der Lichtquelle 6 zu dem ersten Lichtleiter 2 zu leiten, umfasst der erste Lichtleiter 2 mindestens eine Eintrittsfläche. Diese Eintrittsfläche befindet sich beispielhaft an mindestens einer Lateralseite des ersten Lichtleiters 2, anders gesagt an mindestens einem Ende des ersten Lichtleiters 2. Konkret befindet sich die Eintrittsfläche auf mindestens einer Basis des Zylinders, Prismas oder einer anderen länglichen Form des ersten Lichtleiters 2. Die Lichtquelle, zum Beispiel ein LED-Modul, wird auf diese Eintrittsfläche gerichtet. Die Lichtquelle 6 ist in der Fig. 2 dargestellt, wo auch sichtbar ist, dass das Licht von der Seite in den ersten Lichtleiter 2 eintritt. Der erste Lichtleiter 2 besteht aus Kunststoff, vorzugsweise aus klarem PMMA bzw. Polycarbonat. Vom ersten Lichtleiter 2 wird das Licht weiter zum Diffusor 4 und zum zweiten Lichtleiter 3 verteilt, wie weiter unten beschrieben wird.

Der zweite Lichtleiter 3 hat eine flache Form und ist entlang des ersten Lichtleiters 2 angeordnet, d.h. er verläuft ebenfalls in Längsrichtung der Beleuchtungseinrichtung. Der erste Lichtleiter 2 und der zweite Lichtleiter 3 sind so zueinander angeordnet, dass sich das Licht vom ersten Lichtleiter 2 zum zweiten Lichtleiter 3 ausbreiten kann, wobei vorzugsweise mindestens ein Teil des Diffusors 4 zwischen dem ersten Lichtleiter 2 und dem zweiten Lichtleiter 3 angeordnet ist.

Der Diffusor 4 hat ebenfalls eine längliche Form und verläuft in Längsrichtung der Beleuchtungseinrichtung, entlang des ersten Lichtleiters 2 und des zweiten Lichtleiters 3. Der Diffusor 4 weist eine erste Seite auf, die dem ersten Lichtleiter 2 zugewandt ist, und eine zweite Seite, die dem zweiten Lichtleiter 3 zugewandt ist, wobei, insbesondere in der Ausführung gemäß Fig. 1, die erste Seite des Diffusors 4 eine Oberseite des Diffusors 4 ist und die zweite Seite des Diffusors 4 eine Unterseite des Diffusors 4 ist. Der Diffusor 4 ist vorzugsweise so geformt, dass er in den zwischen dem Trägerteil 1 und dem Abdeckteil 5 gebildeten Hohlraum passt und diesen Hohlraum zusammen mit dem ersten Lichtleiter 2 und dem zweiten Lichtleiter 3 effizient ausfüllt.

Das Licht aus dem ersten Lichtleiter 2 tritt durch die erste Seite des Diffusors 4 in den Diffusor 4 ein und breitet sich durch den Diffusor 4 zu seiner zweiten Seite aus, aus deren Teil das Licht aus dem Diffusor 4 in den zweiten Lichtleiter 3 ausgekoppelt wird. In der ersten beispielhaften Ausführung ist die erste Seite des Diffusors 4 um eine Größenordnung von Millimetern vom ersten Lichtleiter 2 beabstandet, und ebenso ist die zweite Seite des Diffusors 4 vom zweiten Lichtleiter 3 beabstandet. Dieser Abstand des ersten Lichtleiters 2 von der ersten Seite des Diffusors 4 wird z. B. durch Rippen gewährleistet, die sich an diesen beiden Teilen befinden, und in gleicher Weise kann auch der Abstand des zweiten Lichtleiters 3 von der zweiten Seite des Diffusors 4 gewährleistet werden. Alternativ kann aber auch der erste Lichtleiter 2 oder der zweite Lichtleiter 3 von der ersten bzw. zweiten Seite des Diffusors 4 einen anderen Abstand haben, wenn diese Ausführung einen sicheren Lichtdurchgang vom ersten Lichtleiter 2 zum Diffusor 4 und vom Diffusor 4 zum zweiten Lichtleiter 3 ermöglicht. Alternativ kann die erste Seite des Diffusors 4 in Kontakt mit dem ersten Lichtleiter 2 und die zweite Seite des Diffusors 4 in Kontakt mit dem zweiten Lichtleiter 3 sein.

Neben der bereits erwähnten Funktion, Licht in den zweiten Lichtleiter 3 auszukoppeln, erfüllt der Diffusor 4 die wesentliche Funktion, eine Lichtlinie zu erzeugen. Somit kann definiert werden, dass der Diffusor 4 aus zwei Grundteilen besteht, wobei der erste Teil zwischen dem ersten Lichtleiter 2 und dem zweiten Lichtleiter 3 angeordnet ist und dazu dient, das Licht in den zweiten Lichtleiter 3 auszukoppeln und der zweite Teil in der ersten Lücke 8 zwischen dem Trägerteil 1 und dem Abdeckteil 5 angeordnet ist und dazu dient, eine Lichtlinie in dieser ersten Lücke 8 zu bilden. Somit hat der zweite Teil des Diffusors 4 eine längliche, flache Form, die formschlüssig in die erste Lücke 8 eingreift, wobei in der ersten beispielhaften Ausführung die erste Lücke 8 zwischen dem Trägerteil 1 und der Oberkante des Abdeckteils 5 gebildet ist. Ferner kann der Diffusor 4 einen Verbindungsteil zur Verbindung mit dem Trägerteil 1 aufweisen, wobei in Fig. 1 der Verbindungsteil dem Teil des Diffusors 4 entspricht, der durch das Trägerteil 1 hindurchgeht. Alternativ muss der Diffusor 4 jedoch keinen solchen Verbindungsteil umfassen und kann über einen anderen Teil des Diffusors 4, z. B. über den oben beschriebenen ersten oder zweiten Teil des Diffusors 4, an dem Trägerteil 1 befestigt, z. B. geklebt, werden.

Der Diffusor 4 besteht beispielhaft aus einem milchigen Kunststoff (z.B. Polycarbonat), wodurch eine hinreichend homogene Lichtlinie in der ersten Lücke 8 ermöglicht wird, und sorgt auch dafür, dass das Licht aus dem ersten Lichtleiter 2 homogener in den zweiten Lichtleiter 3 gelangt, wodurch eine hinreichend homogene Beleuchtung des durchleuchteten Dekors entsteht, die im Folgenden beschrieben wird. Alternativ kann der Diffusor 4 auch nur zur Bildung einer Lichtlinie verwendet werden, d. h. er muss nicht einen ersten Teil umfassen, der zwischen dem ersten Lichtleiter 2 und dem zweiten Lichtleiter 3 angeordnet ist, solange das Licht noch vom ersten Lichtleiter 2 zum zweiten Lichtleiter 3 durchgelassen wird. In diesem Fall können der erste Lichtleiter 2 und der zweite Lichtleiter 3 in einem bestimmten Abstand zueinander stehen oder punktuell miteinander in Kontakt sein. Wie bereits oben erwähnt, ist jedoch bei dieser alternativen Ausführung, bei der sich kein Teil des Diffusors 4 zwischen dem ersten Lichtleiter 2 und dem zweiten Lichtleiter 3 befindet, die Homogenität des durchleuchteten Dekors generell beeinträchtigt.

Das durchleuchtete Dekor entsteht, indem das Abdeckteil 5 mit Licht aus dem zweiten Lichtleiter 3 beleuchtet wird, d. h. das Licht wird zunächst vom zweiten Lichtleiter 3 in Richtung zum Abdeckteil 5 ausgekoppelt und gelangt dann zumindest teilweise durch das Abdeckteil 5 in den Fahrzeuginnenraum. Daher muss zumindest ein Teil des Abdeckteils 5 lichtdurchlässig sein, damit die Beleuchtung vom Fahrzeuginnenraum aus beobachtet werden kann.

Der zweite Lichtleiter 3 hat eine dem Trägerteil 1 zugewandte Rückseite und eine dem Abdeckteil 5 zugewandte Vorderseite, wobei auf der Rückseite des zweiten Lichtleiters 3 eine Auskopplungsstruktur 7 zum Auskoppeln des Lichts aus dem zweiten Lichtleiter 3 angeordnet ist. Die Auskopplungsstruktur 7 wird beispielhaft durch eine Reihe von Ausnehmungen und Vorsprüngen gebildet und bildet so einzelne Auskopplungselemente, von denen Licht zur Vorderseite des zweiten Lichtleiters 3 und damit zum Abdeckteil 5 reflektiert wird. Wie in Fig. 1 zu sehen ist, können die Auskopplungselemente z. B. eine runde Form haben. Die konkrete Anordnung der Auskopplungsstruktur 7 kann aber auch anders realisiert werden, wobei der Fachmann die einzelnen alternativen Ausführungen realisieren kann, da die Lösungen zur Auskopplung des Lichtes aus dem Lichtleiter allgemein bekannt sind. Vorzugsweise bildet die Auskopplungsstruktur 7 ein dekoratives Muster, d. h. sie hat nicht nur die Funktion, das Licht des zweiten Lichtleiters auszukoppeln, sondern dieses dekorative Muster spiegelt sich gleichzeitig in der endgültigen Form des durchleuchteten Dekors wider. Der zweite Lichtleiter ist beispielhaft aus Kunststoff, konkret z. B. aus klarem PMMA oder Polycarbonat gefertigt.

Wie im Schnittbild in der Fig. 1 dargestellt ist, schließt das Abdeckteil 5 an den zweiten Lichtleiter 3 an, den es von der Vorderseite her überlappt, und schließt auch teilweise an den Diffusor 4 an, nämlich auf der zweiten Seite des Diffusors 4. In einer ersten beispielhaften Ausführung umfasst das Abdeckteil 5 eine lichtdurchlässige Blende 10 und einen Rahmen 11, der um den Umfang der lichtdurchlässigen Blende 10 herum angeordnet ist. Der Rahmen 11 besteht beispielhaft aus einem nicht lichtdurchlässigen Kunststoff, z.B. schwarzem Polycarbonat, und dient zur Befestigung, z.B. zum Einklipsen, am Trägerteil 1. Die Form des Rahmens 11 ist vorteilhafterweise an die Form des Diffusors 4 angepasst, konkret so, indem sie teilweise abgeschrägt ist, wobei diese Abschrägung der Abschrägung des Diffusors 4 entspricht, der eine Trennwand zwischen einem ersten Teil des Diffusors 4 zur Auskopplung des Lichts vom ersten Lichtleiter 2 zum zweiten Lichtleiter 3 und einem zweiten Teil des Diffusors 4 zur Bildung der Lichtlinie in der ersten Lücke 8 bildet.

Der Rahmen 11 definiert ferner eine Öffnung für die lichtdurchlässige Blende 10, wobei diese Öffnung eine beispielhafte rechteckige Form hat. Der zweite Lichtleiter 3 und die lichtdurchlässige Blende 10 haben eine beispielhafte rechteckige Plattenform, wodurch ein rechteckiges durchleuchtetes Dekor entsteht. Alternativ können die lichtdurchlässige Blende 10 und die entsprechende Öffnung im Rahmen 11 jedoch auch eine andere Form haben, wodurch ein lichtdurchlässiges Dekor mit einer anderen Form entsteht. Je nach der Form der lichtdurchlässigen Blende 10 kann auch die Form des zweiten Lichtleiters 3 verändert werden.

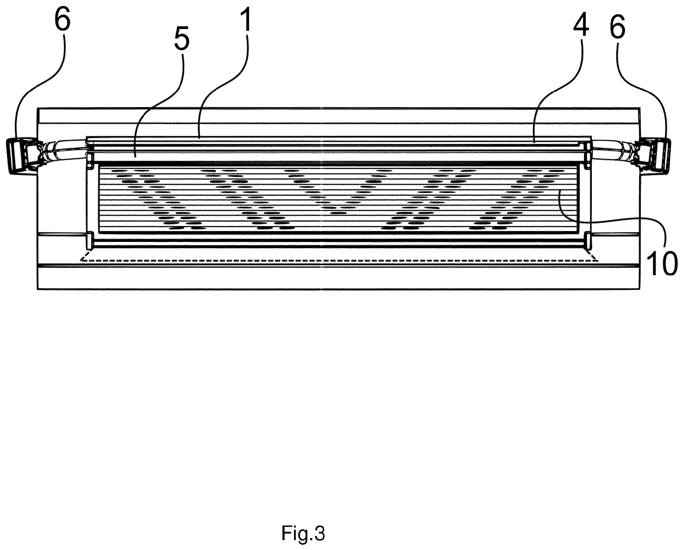

Das dekorative Muster des durchleuchteten Dekors wird einerseits durch eine Auskopplungsstruktur 7 auf der Rückseite des zweiten Lichtleiters 3 gebildet, die als erste dekorative Struktur bezeichnet werden kann, vorzugsweise aber auch durch eine zweite dekorative Struktur 12, die vorzugsweise auf der Rückseite der lichtdurchlässigen Blende 10, d.h. auf der dem zweiten Lichtleiter 3 zugewandten Seite, angeordnet ist. Die zweite dekorative Struktur 12 ist beispielhaft als eine Reihe von Kerben oder Ausnehmungen ausgeführt. Alternativ kann die zweite dekorative Struktur 12 auch auf der Vorderseite der lichtdurchlässigen Blende 10 angeordnet werden, bevorzugt ist jedoch eine Anordnung auf der Rückseite der lichtdurchlässigen Blende 10. Die zweite dekorative Struktur 12 in Kombination mit der Auskopplungsstruktur 7 ermöglicht ein optisch mehr ansprechendes Muster des durchleuchteten Dekors. Das daraus resultierende geschichtete Muster sorgt auch für einen gewissen Tiefeneffekt (3D-Effekt). Das sich daraus ergebende dekorative Muster ist in Fig. 2 oder Fig. 3 zu sehen, wobei die langen Längslinien dem Effekt entsprechen, der durch die Auskopplungsstruktur 7 erzeugt wird, und die kürzeren Längsformationen entsprechen dem Effekt, der durch die zweite dekorative Struktur 12 erzeugt wird. Durch die zweite dekorative Struktur 12 werden beispielsweise schräge Muster oder V-förmige Muster gebildet. Es sind aber auch andere Formen und Muster möglich.

Die lichtdurchlässige Blende 10 kann z. B. aus klarem Kunststoff bestehen, aber auch aus rauchfarbigem (abgedunkeltem) Kunststoff, um die visuelle Wahrnehmung der Beleuchtung weiter zu verbessern. Alternativ kann das Abdeckteil 5 einen Rahmen 11, aber keine lichtdurchlässige Blende 10 mehr umfassen, wobei anstelle der lichtdurchlässigen Blende 10 eine entsprechende Öffnung verbleibt, durch die das Licht in den Fahrzeuginnenraum ausgestrahlt wird. Eine solche Ausführung ist jedoch optisch nicht sehr ansprechend. Alternativ kann die zweite dekorative Struktur 12 auch auf der Vorderseite des zweiten Lichtleiters 3, also auf der der Anordnung der Auskopplungsstruktur 7 gegenüberliegenden Seite, angeordnet werden.

Zusätzlich zu dem durchleuchteten Dekor und der Lichtlinie bietet die Beleuchtungseinrichtung in der Ausführung in der Fig. 1 auch eine indirekte Beleuchtung. Die indirekte Beleuchtung entsteht infolge dessen, dass zwischen dem Abdeckteil 5 und dem Trägerteil 1 nahe der Unterseite der Beleuchtungseinrichtung eine zweite Lücke 9 gebildet wird. Durch diese zweite Lücke 9 wird ein Teil des Lichts aus dem zweiten Lichtleiter 3 ausgestrahlt, und zwar von seiner Unterseite. Ist die Beleuchtungseinrichtung im Fahrzeuginnenraum so angebracht, dass sich eine Innenraumkomponente in der Nähe der zweiten Lücke 9 befindet, wird diese Komponente durch das Licht, das durch die zweite Lücke 9 fällt, beleuchtet. Diese Beleuchtung einer bestimmten Innenraumkomponente wird dann von den Fahrzeuginsassen als so genannte indirekte Beleuchtung wahrgenommen. In der Fig. 2 oder Fig. 3 ist der Bereich der indirekten Beleuchtung schematisch durch die gestrichelte Linie dargestellt.

In einer ersten beispielhaften Ausführung wird ein Teil des Armaturenbretts, der sich unterhalb des durchleuchteten Dekors befindet, indirekt beleuchtet. Alternativ kann die indirekte Beleuchtung auch an einer anderen Stelle, zum Beispiel über dem durchleuchteten Dekor, angebracht werden. In einer solchen Ausführung kann die Lichtlinie jedoch auch an einer anderen Stelle als oberhalb der Oberkante des Abdeckteils 5 angeordnet sein, zum Beispiel unter dem durchleuchteten Dekor. Dabei muss die Lichtlinie in der Vorderansicht nicht völlig gerade sein, sondern kann z. B. gebogen oder gewellt sein. Der Vorteil der erfindungsgemäßen Beleuchtungseinrichtung besteht darin, dass sie eine Kombination von bis zu drei Beleuchtungsarten (durchleuchtetes Dekor, Lichtlinie und indirekte Beleuchtung) mit nur einer Lichtquelle 6 ermöglicht. Die relative Anordnung der ersten Lücke 8 mit dem Teil des Diffusors 4 zur Bildung der Lichtlinie, der zweiten Lücke 9 zur Bildung der indirekten Beleuchtung und des lichtdurchlässigen Teils (lichtdurchlässige Blende 10) des Abdeckteils 5 zur Bildung des durchleuchteten Dekors kann in verschiedenen beispielhaften Ausführungen variieren.

In einer alternativen Ausführung umfasst die Beleuchtungseinrichtung zwei Lichtquellen 6, wie in der Fig. 3 dargestellt ist. Jede Lichtquelle 6, z. B. LED, befindet sich auf einer Lateralseite des ersten Lichtleiters 2 und strahlt somit von beiden Lateralseiten in den ersten Lichtleiter 2. Obwohl die Verwendung von zwei Lichtquellen 6 im Prinzip nicht erforderlich ist und alle Beleuchtungsarten mit nur einer Lichtquelle 6, wie in der Fig. 2 gezeigt, gewährleistet werden können, dank zwei Lichtquellen 6 kann die Beleuchtung intensiver werden.

### Gewerbliche Anwendbarkeit

Die oben beschriebene Beleuchtungseinrichtung für die Beleuchtung des Fahrzeuginnenraums kann nicht nur am Armaturenbrett, sondern beispielsweise auch an der Türverkleidung oder an anderen Komponenten des Fahrzeuginnenraums angebracht werden.

### Bezugszeichenliste

- 1 -: Trägerteil
- 2 -: erster Lichtleiter
- 3 -: zweiter Lichtleiter
- 4 -: Diffusor
- 5 -: Abdeckteil
- 6 -: Lichtquelle
- 7 -: Auskopplungsstruktur
- 8 -: erste Lücke
- 9 -: zweite Lücke
- 10 -: lichtdurchlässige Blende
- 11 -: Rahmen
- 12 -: zweite dekorative Struktur

## Patentansprüche

1. Beleuchtungseinrichtung für die Beleuchtung eines Fahrzeuginnenraums umfassend ein Trägerteil (1) zur Befestigung im Fahrzeuginnenraum, einen ersten Lichtleiter (2), einen zweiten Lichtleiter (3), einen Diffusor (4), ein Abdeckteil (5) und wenigstens eine Lichtquelle (6), wobei der erste Lichtleiter (2) eine längliche Form aufweist und wenigstens eine Eintrittsfläche für den Lichteintritt umfasst, wobei die wenigstens eine Lichtquelle (6) auf die wenigstens eine Eintrittsfläche des ersten Lichtleiters (2) gerichtet ist,
**dadurch gekennzeichnet, dass**
das Licht der wenigstens einen Lichtquelle (6) vom ersten Lichtleiter (2) weiter zum Diffusor (4) und zum zweiten Lichtleiter (3) verteilt wird, und dass zwischen dem Abdeckteil (5) und dem Trägerteil (1) ein Hohlraum definiert ist, in dem der erste Lichtleiter (2), der zweite Lichtleiter (3) und der Diffusor (4) angeordnet sind, wobei der zweite Lichtleiter (3) entlang des ersten Lichtleiters (2) angeordnet ist, so dass sich das Licht der wenigstens einen Lichtquelle (6) vom ersten Lichtleiter (2) zum zweiten Lichtleiter (3) ausbreiten kann, wobei der zweite Lichtleiter (3) eine flache Form hat, umfassend eine dem Trägerteil (1) zugewandte Rückseite und eine dem Abdeckteil (5) zugewandte Vorderseite, wobei wenigstens ein Teil des Abdeckteils (5) lichtdurchlässig ist und auf der Rückseite des zweiten Lichtleiters (3) eine Auskopplungsstruktur (7) zur Auskopplung des Lichts aus dem zweiten Lichtleiter (3) in Richtung zum Abdeckteil (5) angeordnet ist, wobei der Hohlraum zwischen dem Abdeckteil (5) und dem Trägerteil (1) eine erste Lücke (8) umfasst, die sich, wenn die Beleuchtungseinrichtung am Fahrzeug angebracht ist, in den Fahrzeuginnenraum entlang des Abdeckteils (5) erstreckt und wobei wenigstens ein Teil des Diffusors (4) in dieser ersten Lücke (8) angeordnet ist und dazu dient, eine Lichtlinie in dieser ersten Lücke (8) zu erzeugen.

2. Beleuchtungseinrichtung nach Anspruch 1, **dadurch gekennzeichnet, dass** zumindest ein Teil des Diffusors (4) zwischen dem ersten Lichtleiter (2) und dem zweiten Lichtleiter (3) angeordnet ist, wobei der Diffusor (4) eine erste, dem ersten Lichtleiter (2) zugewandte Seite und eine gegenüberliegende zweite, dem zweiten Lichtleiter (3) zugewandte Seite umfasst.

3. Beleuchtungseinrichtung nach einem der vorhergehenden Ansprüche, **dadurch gekennzeichnet, dass** der Diffusor (4) aus zwei Grundteilen besteht, wobei der erste Teil zwischen dem ersten Lichtleiter (2) und dem zweiten Lichtleiter (3) angeordnet ist und dazu dient, das Licht in den zweiten Lichtleiter (3) auszukoppeln und der zweite Teil in der ersten Lücke (8) zwischen dem Trägerteil (1) und dem Abdeckteil (5) angeordnet ist und dazu dient, die Lichtlinie in dieser ersten Lücke (8) zu bilden.

4. Beleuchtungseinrichtung nach einem der vorhergehenden Ansprüche, **dadurch gekennzeichnet, dass** das Abdeckteil (5) oder der zweite Lichtleiter (3) eine zweite dekorative Struktur (12) umfasst.

5. Beleuchtungseinrichtung nach einem der vorhergehenden Ansprüche, **dadurch gekennzeichnet, dass** das Abdeckteil (5) eine lichtdurchlässige Blende (10) und einen Rahmen (11) umfasst, der um den Umfang der lichtdurchlässigen Blende (10) herum angeordnet ist.

6. Beleuchtungseinrichtung nach einem der Ansprüche 4 und 5, **dadurch gekennzeichnet, dass** die zweite dekorative Struktur (12) auf der dem zweiten Lichtleiter (3) zugewandten Rückseite der lichtdurchlässigen Blende (10) angeordnet ist.

7. Beleuchtungseinrichtung nach einem der vorhergehenden Ansprüche, **dadurch gekennzeichnet, dass** die Auskopplungsstruktur (7) auf der Rückseite des zweiten Lichtleiters (3) ein dekoratives Muster bildet.

8. Beleuchtungseinrichtung nach einem der vorhergehenden Ansprüche, **dadurch gekennzeichnet, dass** das Abdeckteil (5) eine Oberkante aufweist und die erste Lücke (8) sich entlang der Oberkante des Abdeckteils (5) in den Fahrzeuginnenraum erstreckt.

9. Beleuchtungseinrichtung nach einem der vorhergehenden Ansprüche, **dadurch gekennzeichnet, dass** der Hohlraum zwischen dem Abdeckteil (5) und dem Trägerteil (1) eine zweite Lücke (9) aufweist, die sich in den Fahrzeuginnenraum erstreckt.

10. Beleuchtungseinrichtung nach Anspruch 9, **dadurch gekennzeichnet, dass** das Abdeckteil (5) eine Unterkante aufweist und die erste Lücke (8) sich entlang der Unterkante des Abdeckteils (5) in den Fahrzeuginnenraum erstreckt.

## Claims

1. Lighting apparatus for illuminating a vehicle interior, comprising a support part (1) for fastening in the vehicle interior, a first light guide (2), a second light guide (3), a diffuser (4), a cover part (5) and at least one light source (6), wherein the first light guide (2) has an elongated shape and comprises at least one entry surface for the light entry, wherein the at least one light source (6) is directed towards the at least one entry surface of the first light guide (2),
**characterized in that**
the light from the at least one light source (6) is distributed from the first light guide (2) to the diffuser (4) and to the second light guide (3), and **in that** a cavity is defined between the cover part (5) and the support part (1), in which cavity the first light guide (2), the second light guide (3) and the diffuser (4) are arranged, wherein the second light guide (3) is arranged along the first light guide (2) so that the light from the at least one light source (6) can propagate from the first light guide (2) to the second light guide (3), wherein the second light guide (3) has a flat shape comprising a rear side facing the support part (1) and a front side facing the cover part (5), wherein at least one part of the cover part (5) is translucent and a decoupling structure (7) is arranged on the rear side of the second light guide (3) for decoupling the light from the second light guide (3) in the direction of the cover part (5), wherein the cavity between the cover part (5) and the support part (1) comprises a first gap (8) which, when the lighting apparatus is fitted on the vehicle, extends into the vehicle interior along the cover part (5), and wherein at least part of the diffuser (4) is arranged in this first gap (8) and is used to produce a light line in this first gap (8).

2. Lighting apparatus according to claim 1, **characterized in that** at least part of the diffuser (4) is arranged between the first light guide (2) and the second light guide (3), wherein the diffuser (4) comprises a first side facing the first light guide (2) and an opposite second side facing the second light guide (3).

3. Lighting apparatus according to any one of the preceding claims, **characterized in that** the diffuser (4) consists of two basic parts, wherein the first part is arranged between the first light guide (2) and the second light guide (3) and is used for decoupling the light into the second light guide (3), and the second part is arranged in the first gap (8) between the support part (1) and the cover part (5) and is used to form the light line in this first gap (8).

4. Lighting apparatus according to any one of the preceding claims, **characterized in that** the cover part (5) or the second light guide (3) comprises a second decorative structure (12).

5. Lighting apparatus according to any one of the preceding claims, **characterized in that** the cover part (5) comprises a translucent screen (10) and a frame (11) which is arranged around the perimeter of the translucent screen (10).

6. Lighting apparatus according to any one of claims 4 and 5, **characterized in that** the second decorative structure (12) is arranged on the rear side of the translucent screen (10) facing the second light guide (3).

7. Lighting apparatus according to any one of the preceding claims, **characterized in that** the decoupling structure (7) forms a decorative pattern on the rear side of the second light guide (3).

8. Lighting apparatus according to any one of the preceding claims, **characterized in that** the cover part (5) has an upper edge and the first gap (8) extends along the upper edge of the cover part (5) into the vehicle interior.

9. Lighting apparatus according to any one of the preceding claims, **characterized in that** the cavity between the cover part (5) and the support part (1) has a second gap (9) which extends into the vehicle interior.

10. Lighting apparatus according to claim 9, **characterized in that** the cover part (5) has a lower edge and the first gap (8) extends along the lower edge of the cover part (5) into the vehicle interior.

## Revendications

1. Dispositif d'éclairage pour l'éclairage d'un habitacle de véhicule comprenant une partie de support (1) pour la fixation dans l'habitacle de véhicule, un premier guide de lumière (2), un second guide de lumière (3), un diffuseur (4), une partie de recouvrement (5) et au moins une source de lumière (6), dans lequel le premier guide de lumière (2) présente une forme oblongue et comprend au moins une surface d'entrée pour l'entrée de lumière, dans lequel la au moins une source de lumière (6) est dirigée sur l'au moins une surface d'entrée du premier guide de lumière (2),
**caractérisé en ce que**
la lumière de l'au moins une source de lumière (6) est répartie du premier guide de lumière (2) davantage vers le diffuseur (4) et vers le second guide de lumière, et **en ce qu'**un espace creux est défini entre la partie de recouvrement (5) et la partie de support (1), espace dans lequel le premier guide de lumière (2), le second guide de lumière (3) et le diffuseur (4) sont agencés, dans lequel le second guide de lumière (3) est agencé le long du premier guide de lumière (2) de sorte que la lumière de l'au moins une source de lumière (6) puisse se diffuser du premier guide de lumière (2) au second guide de lumière (3), dans lequel le second guide de lumière (3) présente une forme plate, comprenant un côté arrière tourné vers la partie de support (1) et un côté avant tourné vers la partie de recouvrement, dans lequel au moins une partie de la partie de recouvrement (5) est perméable à la lumière et une structure de découplage (7) est agencée pour le découplage de la lumière du second guide de lumière (3) en direction de la partie de recouvrement (5) sur le côté arrière du second guide de lumière (3), dans lequel l'espace creux entre la partie de recouvrement (5) et la partie de support (1) comprend une première fente (8) qui s'étend, lorsque le dispositif d'éclairage est monté sur le véhicule, dans l'habitacle de véhicule le long de la partie de recouvrement (5) et dans lequel au moins une partie du diffuseur (4) est agencée dans cette première fente (8) et sert à générer une ligne de lumière dans cette première fente (8).

2. Dispositif d'éclairage selon la revendication 1, **caractérisé en ce qu'** au moins une partie du diffuseur (4) est agencée entre le premier guide de lumière (2) et le second guide de lumière (3), dans lequel le diffuseur (4) comprend un premier côté tourné vers le premier guide de lumière (2) et un second côté opposé tourné vers le second guide de lumière (3).

3. Dispositif d'éclairage selon l'une quelconque des revendications précédentes, **caractérisé en ce que** le diffuseur (4) se compose de deux parties de base, dans lequel la première partie est agencée entre le premier guide de lumière (2) et le second guide de lumière (3) et sert à découpler la lumière dans le second guide de lumière (3) et la seconde partie est agencée dans la première fente (8) entre la partie de support (1) et la partie de recouvrement (5) et sert à former la ligne de lumière dans cette première fente (8).

4. Dispositif d'éclairage selon l'une quelconque des revendications précédentes, **caractérisé en ce que** la partie de recouvrement (5) ou le second guide de lumière (3) comprend une seconde structure (12) décorative.

5. Dispositif d'éclairage selon l'une quelconque des revendications précédentes, **caractérisé en ce que** la partie de recouvrement (5) comprend un panneau (10) perméable à la lumière et un cadre (11) qui est agencé autour de la périphérie du panneau (10) perméable à la lumière.

6. Dispositif d'éclairage selon l'une quelconque des revendications 4 et 5, **caractérisé en ce que** la seconde structure décorative (12) est agencée sur le côté arrière tourné vers le second guide de lumière (3) du panneau (10) perméable à la lumière.

7. Dispositif d'éclairage selon l'une quelconque des revendications précédentes, **caractérisé en ce que** la structure de découplage (7) sur le côté arrière du second guide de lumière (3) forme un motif décoratif.

8. Dispositif d'éclairage selon l'une quelconque des revendications précédentes, **caractérisé en ce que** la partie de recouvrement (5) présente une arête supérieure et la première fente (8) s'étend le long de l'arête supérieure de la partie de recouvrement (5) dans l'habitacle de véhicule.

9. Dispositif d'éclairage selon l'une quelconque des revendications précédentes, **caractérisé en ce que** l'espace creux entre la partie de recouvrement (5) et la partie de support (1) présente une seconde fente (9) qui s'étend dans l'habitacle de véhicule.

10. Dispositif d'éclairage selon la revendication 9, **caractérisé en ce que** la partie de recouvrement (5) présente une arête inférieure et la première fente (8) s'étend le long de l'arête inférieure de la partie de recouvrement (5) dans l'habitacle de véhicule.
